# EUROPEAN PATENT APPLICATION

(11) **EP 2 713 474 A2**
(43) Date of publication of application: **02.04.2014**
(21) Application number: 13184669.3
(22) Date of filing: 17.09.2013
(51) Int. Cl.: H02J 7/02, B25F 5/00

(54) **Driving control circuit and power tool**

(30) Priority: 26.09.2012 JP 2012212716
(71) Applicant: Panasonic Corporation, Kadoma-shi Osaka 571-8501 (JP)
(72) Inventor: Miyazaki, Hiroshi, Chuo-ku, Osaka 540-6207 (JP); Muto, Motoharu, Chuo-ku, Osaka 540-6207 (JP); Ikeda, Masaki, Chuo-ku, Osaka 540-6207 (JP)
(74) Representative: Appelt, Christian W.

(57) **Abstract**

A driving control circuit (20) includes a step-up/down circuit (25) provided in the previous stage of a regulator (26) which generates an operation voltage (V3) of a control circuit (30). The step-up/down circuit (25) performs a step-up or step-down operation in accordance with the voltage supplied from a battery pack (12A; 12B) regardless of the type of the battery pack. The step-up/down circuit (25) generates an adjusted voltage (V2) having a constant voltage value that is suitable for the regulator (26).

## Description

The present invention relates to a driving control circuit provided in a power tool or the like that is capable of selectively using a plurality of types of battery packs that supply different voltages, and to a power tool including the driving control circuit.

Generally, in a power tool, a motor that is a drive source is driven based on drive power supplied from a battery pack that is detachably attached to the power tool. The battery pack may include a rechargeable battery. A control circuit, which controls drive of the motor, performs switching control, such as PWM control, for a switching element coupled in series to the motor, thereby adjusting drive power to be supplied to the motor.

Japanese Laid-Open Patent Publication No. 2011-201006 describes a power tool that is capable of selectively using a plurality of types of battery packs which supply different voltages (different voltage values). In this structure, a control circuit (CPU in the above publication) determines the type of the battery pack, that is, the voltage supplied from the battery pack, and controls the motor by performing switching control in accordance with the supplied voltage.

Although it is not explicitly described in the above publication, an operation voltage of the control circuit (CPU) is generated based on power supplied from the battery pack. In this case, a switching regulator is used to generate a predetermined constant voltage as the operation voltage based on the power supplied from the battery pack. The operation voltage generated by the switching regulator is supplied to the control circuit.

In the structure capable of selectively using different types of battery packs as described above, a circuit configuration of a switching regulator is determined based on a voltage of a certain battery pack. In this case, however, generation efficiency (switching efficiency of the regulator) of the operation voltage of the control circuit is deteriorated with respect to a different voltage (battery pack). This increases a loss in the regulator.

It is an object of the present invention to provide a driving control circuit capable of reducing a loss in a regulator that generates an operation voltage of a control circuit, and to provide a power tool including the driving control circuit.

One embodiment of the invention is a driving control circuit. The driving control circuit includes a drive circuit which adjusts power supplied from a battery pack to a load to drive the load, a control circuit which controls the drive circuit, and a regulator which generates an operation voltage of the control circuit based on the power supplied from the battery pack, wherein the battery pack is one of a plurality of types of battery packs which supply different voltages, the driving control circuit further includes a step-up/down circuit that is provided in the previous stage of the regulator to perform a step-up or step-down operation in accordance with the voltage supplied from the battery pack regardless of the type of the battery pack and supply a constant voltage to the regulator.

In the above structure, it is preferable that the step-up/down circuit is an SEPIC type step-up/down circuit.

In the above structure, it is preferable that the control circuit generates a control voltage in accordance with the voltage supplied from the battery pack, and the step-up/down circuit performs the step-up or step-down operation in response to the control voltage to generate the constant voltage.

In the above structure, it is preferable that the control circuit includes a detection input terminal for receiving a detection voltage indicative of the voltage supplied from the battery pack, and the control circuit generates the control voltage based on the detection voltage.

In the above structure, it is preferable that the driving control circuit further includes an information terminal for receiving identification information according to the voltage supplied from the battery pack.

Another embodiment of the invention is a power tool. The power tool includes the driving control circuit having the above-described structure configured to control drive of the motor that is a drive source provided as the load.

According to the driving control circuit and the power tool of the invention, it is possible to reduce a loss in the regulator that generates the operation voltage of the control circuit.

The invention, together with objects and advantages thereof, may best be understood by reference to the following description of the presently preferred embodiments together with the accompanying drawings in which:
Fig. 1 is an electric block diagram illustrating a power tool according to one embodiment;
Fig. 2 is a circuit diagram illustrating a step-up/down circuit of Fig. 1; and
Fig. 3 is a circuit diagram illustrating a step-up/down circuit of another example.

One embodiment of the present invention will now be described with reference to the drawings.

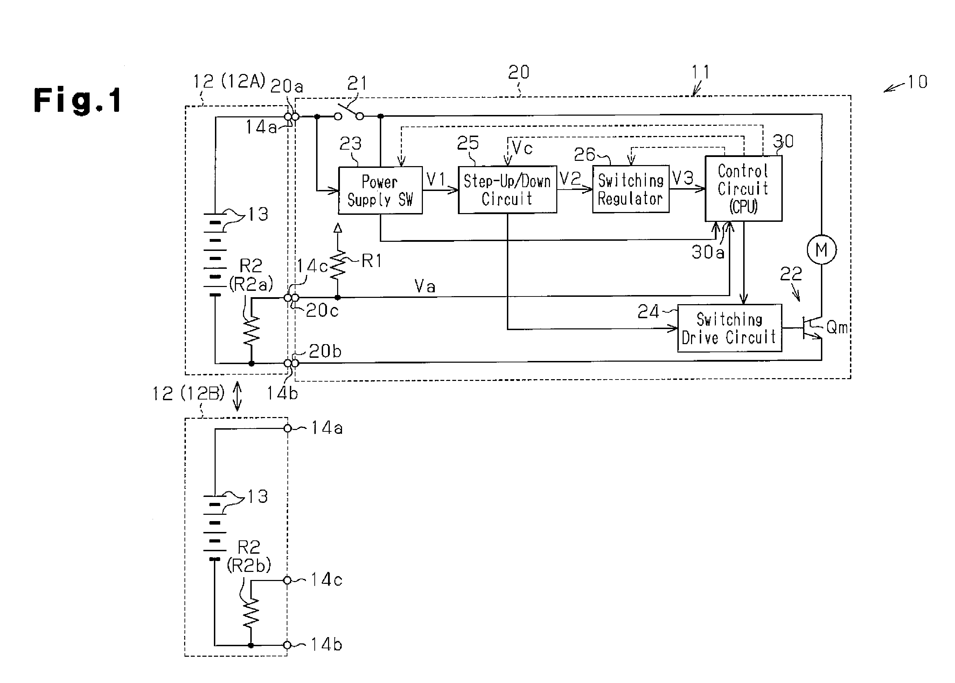

As illustrated in Fig. 1, a power tool 10 includes a power tool body 11, which includes a motor M that serves as a drive source (load), and a battery pack 12 detachably attached to the power tool body 11. In this embodiment, the battery pack 12 is a battery pack 12A or 12B. The power tool body 11 is structurally and electrically configured such that a plurality of types of battery packs 12 (battery packs 12A and 12B) which supply different voltages can be selectively attached to the power tool body 11. The power tool 10 operates based on power supplied from the attached battery pack 12A or 12B.

The battery pack 12A includes a plurality of rechargeable battery cells 13 which are connected to one another in series. Positive terminals and negative terminals of the battery cells 13 are connected to power supply terminals 14a and 14b, respectively. Further, the battery pack 12A includes an identification resistor R2a having a resistance value corresponding to a voltage supplied from the battery pack 12A. The identification resistor R2a has a first terminal, which is connected to the negative terminal of the battery cell 13, that is, the power supply terminal 14b, and a second terminal, which is connected to an information terminal 14c. The battery pack 12B is of a low voltage specification provided with a smaller number of battery cells 13 than that of the battery pack 12A. In the same manner as the battery pack 12A, the battery cells 13 of the battery pack 12B are connected to one another in series and connected to power supply terminals 14a and 14b. The battery pack 12B includes an identification resistor R2b having a resistance value corresponding to a voltage supplied from the battery pack 12B and connected to a power supply terminal 14b and an information terminal 14c. In this manner, in the power tool 10 of the present embodiment, the battery packs 12A and 12B that supply different voltages are selectively used. In the following description, the battery pack 12A or 12B may be referred to as the battery pack "12", and the identification resistor R2a or R2b may be referred to as the identification resistor "R2".

The power tool body 11 includes a driving control circuit 20. The driving control circuit 20 includes power supply terminals 20a and 20b and an information terminal 20c which are respectively connected to the power supply terminals 14a and 14b and the information terminal 14c of the battery pack 12 attached to the power tool body 11. The power supply terminal 20a, which is a positive side terminal, is connected to a first terminal of the motor M through a trigger switch 21 of the power tool body 11. The motor M is a brush motor. A second terminal of the motor M is connected to the power supply terminal 20b, which is a negative side terminal, through a semiconductor switching element Qm serving as the drive circuit 22 that supplies power for driving the motor M. The trigger switch 21 can manually be operated by a user. The trigger switch 21 generates an operation signal including, for example, a command of start or stop of the power tool 10 (motor M). The operation signal generated by the trigger switch 21 is supplied to a control circuit 30 through a power supply switch circuit 23. The control circuit 30 includes a CPU and performs switching control (PWM control) of the semiconductor switching element Qm through a switching drive circuit 24 based on the operation signal from the trigger switch 21. That is, the control circuit 30 controls power supplied to the motor M and thereby controls drive of the motor M.

The power supply switch circuit 23 directly receives the power supplied from the battery pack 12 without through the trigger switch 21. The operation of the power supply switch circuit 23 is controlled by the control circuit 30. The power supply switch circuit 23 operates in cooperation with "ON" and "OFF" of the trigger switch 21. When the trigger switch 21 is turned on, the power supply switch circuit 23 supplies the power of the battery pack 12 to a step-up/down circuit 25. When the trigger switch 21 is turned off, the power supply switch circuit 23 stops the supply of the power to the step-up/down circuit 25.

The step-up/down circuit 25 receives the power supplied from the battery pack 12 as an input voltage V1 and increases or decreases the input voltage V1 to generate an adjusted voltage V2 that is suitable for a switching regulator (three terminal regulator) 26. The adjusted voltage V2 is supplied to the regulator 26. The operation of the step-up/down circuit 25 is controlled by the control circuit 30.

The power tool body 11 includes an internal resistor R1 connected to the information terminal 20c. In a state in which the battery pack 12 is attached to the power tool body 11, the identification resistor R2 (R2a or R2b), which is arranged in the battery pack 12 (12A or 12B), and the internal resistor R1 form a voltage dividing circuit. A divided voltage generated by the resistors R1 and R2 is supplied to the control circuit 30. A resistance value of the identification resistor R2 is different for each type of the battery packs 12 (each voltage). That is, in this example, the identification resistor R2a of the battery pack 12A and the identification resistor R2b of the battery pack 12B are set to different resistance values to each other. The resistance value of the identification resistor R2a or R2b is one example of identification information. The control circuit 30 includes a detection input terminal 30a for receiving the divided voltage as a detection voltage Va indicative of the voltage supplied from the battery pack 12, and determines the type of the battery pack 12 (i.e., the voltage supplied from the battery pack 12) attached to the power tool body 11 based on the detection voltage Va. The control circuit 30 controls the operation of the step-up/down circuit 25 such that the adjusted voltage V2 having a predetermined constant voltage value is supplied to the switching regulator 26 regardless of the type of the battery pack 12 (12A or 12B).

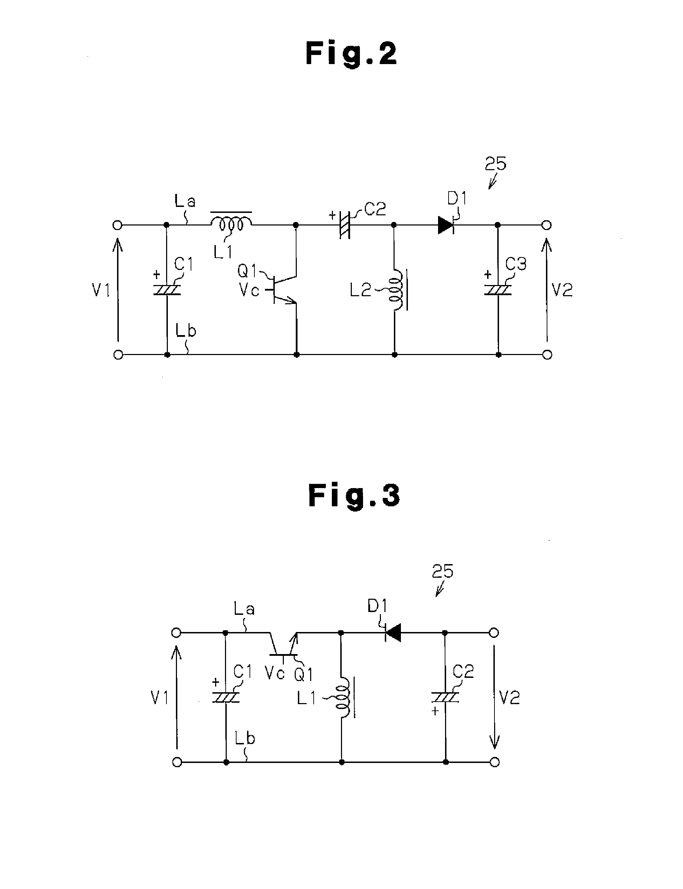

Fig. 2 illustrates an example of the structure of the step-up/down circuit 25. The step-up/down circuit 25 of the present embodiment is of an SEPIC (Single Ended Primary Inductance Converter) type, and includes a capacitor C1 connected between power supply lines La and Lb on the input side. The step-up/down circuit 25 further includes a coil L1 connected to the power supply line La in the next stage of the capacitor C1, a semiconductor switching element Q1 connected between the power supply lines La and Lb in the next stage of the coil L1, and a capacitor C2 connected to the power supply line La in the next stage of the switching element Q1. The step-up/down circuit 25 further includes a coil L2 connected between the power supply lines La and Lb in the next stage of the capacitor C2, a diode D1 connected to the power supply line La in a forward direction in the next stage of the coil L2, and a capacitor C3 connected between the power supply lines La and Lb in the next stage of the diode D1. A voltage between both terminals of the capacitor C3 is output as the adjusted voltage V2.

The control circuit 30 performs the switching control (PWM control) of the switching element Q1 of the step-up/down circuit 25. The control circuit 30 generates a control voltage Vc, which controls the switching element Q1, based on the detection voltage Va. In the present embodiment, when the high voltage type battery pack 12A is attached to the power tool body 11, a duty ratio of the switching element Q1 is reduced and then the step-up/down circuit 25 performs the step-down operation. On the other hand, when the low voltage type battery pack 12B is attached to the power tool body 11, the duty ratio of the switching element Q1 is increased and then the step-up/down circuit 25 performs the step-up operation. Accordingly, the step-up/down circuit 25 operates to generate the adjusted voltage V2 having a constant voltage value from the input voltage V1 having a different voltage value.

As illustrated in Fig. 1, the switching regulator 26 receives the adjusted voltage V2 adjusted by the step-up/down circuit 25 and generates an operation voltage V3 of the control circuit 30 based on the control of the control circuit 30. In the present embodiment, since the adjusted voltage V2 of a constant voltage value that is suitable for the regulator 26 is generated by the step-up/down circuit 25 regardless of the type of the battery pack 12 (12A or 12B), switching efficiency of the switching regulator 26 is always maintained excellently. In the present embodiment, the voltage is adjusted in a stepwise manner so that the voltage generation operation is performed in the step-up/down circuit 25 and the regulator 26 in a preferred manner.

The control circuit 30 operates based on the operation voltage V3 from the switching regulator 26. The control circuit 30 controls the semiconductor switching element Qm through the switching drive circuit 24 based on the operation of the trigger switch 21 and performs drive control of the motor M. Further, the control circuit 30 determines the type of the battery pack 12 (12A or 12B) attached to the power tool body 11, i.e., the voltage supplied from the battery pack 12, and controls the operations of the power supply switch circuit 23, the step-up/down circuit 25, and the switching regulator 26.

The present embodiment has the following advantages.
(1) The step-up/down circuit 25 is provided in the previous stage of the switching regulator 26. The step-up/down circuit 25 performs the step-up or step-down operation in accordance with the voltage supplied from the battery pack 12 (12A or 12B) regardless of the type of the battery pack 12 to generate the adjusted voltage V2 having a constant voltage value that is suitable for the regulator 26. Thus, switching efficiency of the regulator 26 is always maintained excellently. As a result, a loss in the regulator 26 is reduced, heat generated from the driving control circuit 20 is reduced, and power consumption is reduced. This may improve the continuity when the power tool 10 is used.
(2) An SEPIC type step-up/down circuit is used as the step-up/down circuit 25. According to this structure, since polarities of the input voltage V1 and the output voltage (adjusted voltage V2) are the same, a circuit for inverting polarity is unnecessary. As a result, the driving control circuit 20 may be simplified and reduced in size.

It should be apparent to those skilled in the art that the above embodiment may be embodied in many other specific forms without departing from the scope of the present invention. Particularly, it should be understood that the above embodiment may be embodied in the following forms.

The step-up/down circuit 25 is not limited to the SEPIC type illustrated in Fig. 2, and, for example, an inverting type converter illustrated in Fig. 3 may be used. The inverting type converter includes a capacitor C1 connected between power supply lines La and Lb on the input side, a semiconductor switching element Q1 connected to the power supply line La in the next stage of the capacitor C1, and a coil L1 connected between the power supply lines La and Lb in the next stage of the switching element Q1. Further, the inverting type converter includes a diode D1 connected to the power supply line La in a reverse direction in the next stage of the coil L1, and a capacitor C2 connected between the power supply lines La and Lb in the next stage of the diode D1. A voltage between both terminals of the capacitor C2 is output as the adjusted voltage V2. The inverting type converter may be configured by a smaller number of elements than that of the SEPIC type converter illustrated in Fig. 2.

The above embodiment is applied to the power tool 10 which selectively uses the two types of battery packs 12A and 12B, but may be applied to a power tool which selectively uses the three or more types of battery packs.

In the above embodiment, the identification resistor R2 indicating identification information for identifying the type of the battery pack 12 (12A or 12B) is used. Instead, a nonvolatile memory or the like that stores the identification information may be used.

The motor M may be a motor other than the brush motor, for example, a brushless motor.

The driving control circuit 20 may be used for a device other than the power tool. Further, the driving control circuit 20 may control a load other than the motor.

The present examples and embodiments are to be considered as illustrative and not restrictive, and the invention is not to be limited to the details given herein, but may be modified within the scope and equivalence of the appended claims.

## Claims

1. A driving control circuit (20) comprising a drive circuit (22) configured to adjust power supplied from a battery pack (12A; 12B) to a load (M) to drive the load, a control circuit (30) configured to control the drive circuit (22), and a regulator (26) configured to generate an operation voltage (V3) of the control circuit (30) based on the power supplied from the battery pack (12A; 12B), wherein
the battery pack is one of a plurality of types of battery packs (12A, 12B) which supply different voltages,
the driving control circuit (20) **characterized by** further comprising a step-up/down circuit (25) provided in the previous stage of the regulator (26) to perform a step-up or step-down operation in accordance with the voltage supplied from the battery pack (12A; 12B) regardless of the type of the battery pack (12A; 12B) and supply a constant voltage (V2) to the regulator (26).

2. The driving control circuit (20) according to claim 1, wherein the step-up/down circuit (25) is an SEPIC type step-up/down circuit.

3. The driving control circuit (20) according to claim 1 or 2, wherein
the control circuit (30) is configured to generate a control voltage (Vc) in accordance with the voltage supplied from the battery pack (12A; 12B), and
the step-up/down circuit (25) is configured to perform the step-up or step-down operation in response to the control voltage (Vc) to generate the constant voltage (V2).

4. The driving control circuit (20) according to claim 3, wherein
the control circuit (30) includes a detection input terminal (30a) for receiving a detection voltage (Va) indicative of the voltage supplied from the battery pack (12A; 12B), and
the control circuit (30) is configured to generate the control voltage (Vc) based on the detection voltage (Va).

5. The driving control circuit (20) according to one of the claims 1 to 4, further comprising an information terminal (14c) for receiving identification information (R2a; R2b) according to the voltage supplied from the battery pack (12A; 12B).

6. A power tool (10) comprising the driving control circuit (20) according to any one of claims 1 to 5, wherein the power tool (10) is configured to control drive of the motor (M) that is a drive source provided as the load.
